# EUROPEAN PATENT APPLICATION

(11) **EP 4 841 339 A1**
(43) Date of publication of application: **18.11.2026**
(21) Application number: 26177858.3
(22) Date of filing: 11.05.2026
(51) Int. Cl.: G02F 1/153, G02F 1/1334, G02F 1/1523

(54) **LIGHT MODULATING ELEMENT AND LAMINATE INCLUDING LIGHT MODULATING ELEMENT**

(30) Priority: 14.05.2025 JP 2025081315
(71) Applicant: Hayashi Telempu Corporation, Nagoya-shi, Aichi 460-0013 (JP)
(72) Inventor: FUKUI, Michiaki, Nagoya-shi, 460-0013 (JP); NAKANISHI, Soichiro, Nagoya-shi, 460-0013 (JP)
(74) Representative: Maikowski & Ninnemann Patentanwälte Partnerschaft mbB

(57) **Abstract**

A light modulating element (10) including: a first transparent conductive substrate (1A); a second transparent conductive substrate (1B); an electrochromic material layer (2) laminated on the first transparent conductive substrate; an ion storage layer (3) laminated on the second transparent conductive substrate; and a liquid crystal layer (4) with ion conductivity, sandwiched between the electrochromic material layer and the ion storage layer, wherein the liquid crystal layer contains a liquid crystalline material (4b), a polymer material (4c), and an electrolyte supporting salt.

## Description

### CROSS REFERENCE TO THE RELATED APPLICATION

This application is based on and claims Convention priority to Japanese patent application No. 2025-081315, filed May 14, 2025, the entire disclosure of which is herein incorporated by reference as a part of this application.

### FIELD OF THE INVENTION

The present invention relates to a light modulating element that enables various states of light modulation, and a laminate such as a laminated glass including the light modulating element.

### BACKGROUND ART

For electric vehicles that have become widely used in recent years, employment of large glass roofs has become popular so as to relieve cramped feelings caused by the presence of batteries mounted under the floor. In this regard, there has been a growing demand for light modulating glass that can control the light transmittance depending on day and night or changes in weather.

Examples of light modulating glass in widespread use at present include a laminated glass including a polymer-dispersed liquid crystal (PDLC) type light modulating element. This type of light modulating element has a laminated structure including a polymer film with dispersed liquid crystal droplets and transparent conductive films, where the polymer film is sandwiched between the conductive films. At the time of energization, the liquid crystals are oriented in the direction of the voltage application, thereby resulting in transparent appearance. When the power supply is turned off, the liquid crystals are randomly oriented causing translucent appearance due to light scattering by the liquid crystals.

Window glass incorporated with the PDLC type light modulating element can be easily switched by ON/OFF of energization between a transparent state and a translucent state that blocks the view. Thus, the window glass of this type has been increasingly used for indoor partition walls in offices, hospitals, and the like, and the application to the roof glass of vehicles has also been proposed.

In recent years, electrochromic elements have been attracting attention as an alternative to PDLC type light modulating elements. Electrochromic elements function as a light modulating element through electrochromism that is a phenomenon of change in color tone of a material as a result of change in oxidation/reduction state of the material caused by application of electric voltage. The electrochromic elements are used in applications such as anti-glare glass for aircraft and automobiles, window glass for buildings, or snow goggles.

In addition, the use of a PDLC type element and an electrochromic element in combination has also been studied. For example, WO 2022/097739 A describes an interlayer film structure for a laminated panel, which is used as a structure sandwiched between two transparent panels. The interlayer film structure includes a first modulating film and a second modulating film laminated in thickness direction, where the first light modulating film is switchable between light transmission mode and light scattering mode, and the second light modulating film has an adjustable visible light transmittance. WO 2022/097739 A describes that a polymer-dispersed liquid crystal film and an electrochromic film can be used respectively as the first light modulating film and the second light modulating film.

Conventional PDLC type light modulating elements have an effect of blocking the view by light scattering when energization is turned off, but cannot provide high light-sealing properties. In a colored state, electrochromic elements can provide higher light shielding property than PDLC elements, but cannot have an effect of blocking view due to lack of light-scattering function.

WO 2022/097739 A describes that combining a first film with a second film can provide an interlayer film structure for a laminated panel, which has both functions of light scattering and light shielding and achieves sufficient light transmittance in a light transmission mode. However, for example, when the first film is a PDLC film and the second film is an electrochromic film, electrode layers have to be provided on both sides of each of the light modulating films. As a result, it is necessary to form a laminated structure including a large number of layers including an adhesive layer for bonding the first film and the second film. Thus, the manufacturing process becomes complicated, and the thickness is also increased, and the case of using the laminated panel as the roof glass of a vehicle has the problem of complicated assembling work such as harness routing.

An object of the present invention is to provide a thin light modulating element, which is, in a simple configuration, capable of achieving various light modulating functions by combining scattering and transmission of light and coloring and decoloring, and a laminate including the light modulating element.

### SUMMARY OF THE INVENTION

A first configuration according to the present invention is a light modulating element including:
a first transparent conductive substrate;
a second transparent conductive substrate;
an electrochromic material layer laminated on the first transparent conductive substrate;
an ion storage layer laminated on the second transparent conductive substrate; and
a liquid crystal layer with ion conductivity, sandwiched between the electrochromic material layer and the ion storage layer,
wherein the liquid crystal layer contains a liquid crystalline material, a polymer material, and an electrolyte supporting salt.

The light modulating element mentioned above allows the functions of conventional PDLC light modulating element and electrochromic light modulating element to be both achieved in a thin light modulating element.

The above-described light modulating element may be a light modulating element that is capable of functioning in four modes including:
a first mode in which the electrochromic material layer is decolored while the liquid crystal layer is transparent;
a second mode in which the electrochromic material layer is decolored while the liquid crystal layer scatters light;
a third mode in which the electrochromic material layer is colored while the liquid crystal layer is transparent; and
a fourth mode in which the electrochromic material layer is colored while the liquid crystal layer scatters light.

The use of the functions of the liquid crystal layer and the electrochromic material layer in combination enables multi-stage light modulation.

The above-described light modulating element may be a light modulating element configured to be capable of applying a direct-current voltage and an alternating-current voltage between the first transparent conductive substrate and the second transparent conductive substrate,
wherein the four modes are switched by ON/OFF of the direct-current voltage, reversing the direction of applying the direct-current voltage, and ON/OFF of the alternating-current voltage.

In the above-described light modulating element, the light modulating function can be switched by the simple process.

In the above-described light modulating element, the liquid crystal layer may contain an ionic liquid. In this configuration, the effect of ion conduction can be improved by the electrolyte supporting salt in a liquid state.

The light modulating element may be a light modulating element in which the ion storage layer further shows colorability depending on oxidation or reduction, wherein
the ion storage layer is colored by reduction when the electrochromic material layer is colored by oxidation, and
the ion storage layer is colored by oxidation when the electrochromic material layer is colored by reduction.

The light modulating element in the above-described configuration may enhance the light modulating effect achieved by coloration of the electrochromic material layer.

A laminate according to the present invention may be a laminate including an outer glass, an inner glass, and the light modulating element disposed between the outer glass and the inner glass.

According to the present invention, it is possible to provide a light modulating element, which can achieve various light modulating functions depending on the usage, and a laminate including the light modulating element.

Note that any combination of at least two components disclosed in the claims and/or the specification is included in the present invention. In particular, any combination of two or more of the claims set forth in the appended claims is included in the present invention.

### BRIEF DESCRIPTION OF THE DRAWINGS

The present invention will be more clearly understood from the following description of an embodiment with reference to the accompanying drawings. However, the embodiment and drawings are merely illustrative and explanatory, and should not be utilized to define the scope of the present invention. The scope of the present invention is defined by the appended claims. In the accompanying drawings, like references are used to denote like or corresponding parts throughout the several drawings.
Fig. 1 is a schematic side view showing a configuration of a light modulating element according to an embodiment of the present invention.
Fig. 2 is a cross-sectional view of the light modulating element, taken along the line II-II in Fig. 1.
Fig. 3 is a longitudinal sectional view for explaining a laminated structure of a light modulating element according to an embodiment of the present invention.
Fig. 4 is a schematic sectional view showing a configuration of a laminate (laminated glass) according to an embodiment of the present invention.

### DESCRIPTION OF EMBODIMENTS

A light modulating element according to the present invention is a light modulating element including: a first transparent conductive substrate; a second transparent conductive substrate; an electrochromic material layer laminated on the first transparent conductive substrate; an ion storage layer laminated on the second transparent conductive substrate; and a liquid crystal layer with ion conductivity, sandwiched between the electrochromic material layer and the ion storage layer, wherein the liquid crystal layer contains a liquid crystalline material, a polymer material, and an electrolyte supporting salt. As a result of extensive studies by the inventors to develop a thin light modulating element that can achieve various light modulating functions, it was found that a layer having functions of both of a liquid crystal layer of a PDLC element and an electrolyte layer of an electrochromic element can be formed by appropriately blending materials. The PDLC element can be operated by an alternating-current voltage. On the other hand, the electrochromic element is controlled by a direct-current voltage, and even when the voltage is turned off at a certain point of time, the colored/decolored state at that point of time is maintained. Therefore, by incorporating the light transmission/scattering state achieved by the liquid crystal and the colored/decolored state achieved by the electrochromic material can be independently controlled in a light modulating element in which the above-described layer is incorporated together with the electrochromic material layer. Thus the inventors arrived at the present invention. Hereinafter, the present invention will be described with reference to the drawings. It should be noted the dimensional ratio of each part on the drawings is not intended to reflect actual sizes.

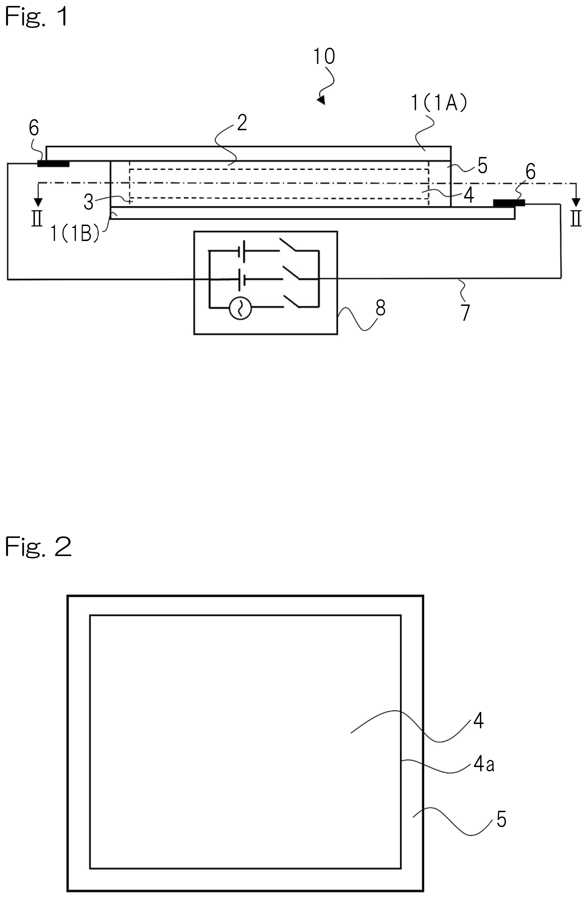

Fig. 1 is a schematic side view for explaining a configuration according to an embodiment of the present invention.

A light modulating element 10 according to the present embodiment has a laminated structure including a pair of transparent conductive substrates 1 composed of a first substrate 1A and a second substrate 1B, an electrochromic material layer 2 laminated on the first substrate 1A, an ion storage layer 3 disposed on the second substrate, and a liquid crystal layer 4 sandwiched between the two layers. Although not an essential configuration, a sealing material (outer edge member) 5 for sealing at least the periphery of the liquid crystal layer 4 may be further provided between the first substrate 1A and the second substrate 1B.

An electrode 6 is connected to each of the pair of transparent conductive substrates 1, and is electrically connected to a control system 8 via a wiring 7. The control system 8 is configured to be capable of applying an alternating-current voltage and bidirectionally applying a direct-current voltage between the substrates 1A and 1B. For example, a positive direct-current voltage or a negative direct-current voltage can be applied from the substrate 1A to the substrate 1B, and the voltage between the substrate 1A and the substrate 1B can be made zero by short-circuiting the both electrodes.

Fig. 2 is a cross-sectional view taken along the line II-II in Fig. 1. In the present embodiment, the outer periphery (side surface) 4a of the liquid crystal layer 4 is completely surrounded by a sealing material 5.

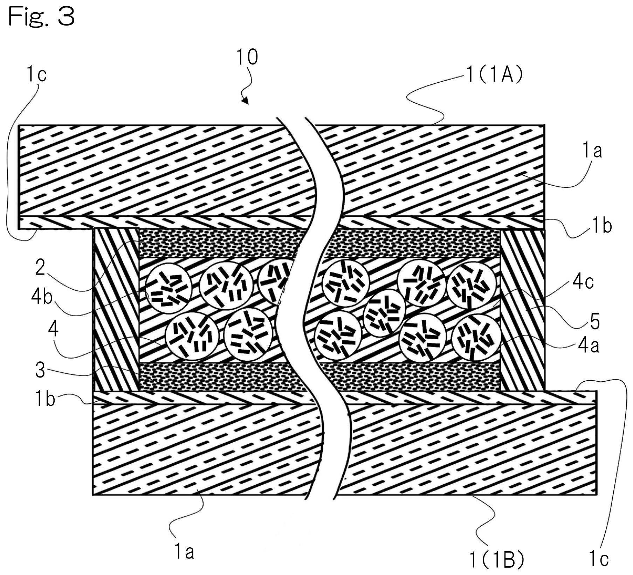

Fig. 3 is a schematic sectional view for explaining the laminated structure of the light modulating element 10. The transparent conductive substrate 1 includes a substrate 1a made of a transparent material and a transparent conductive layer 1b laminated on the substrate 1a (over the inner surface of the substrate la). An electrochromic material layer 2 is laminated on a conductive surface 1c (surface of the conductive layer 1b) of the first substrate 1A, an ion storage layer 3 is laminated on a conductive surface 1c of the second substrate 1B, and a liquid crystal layer 4 is sandwiched between the electrochromic material layer 2 and the ion storage layer 3. Further, the ion storage layer 3 may contain a different type of electrochromic material from that of the electrochromic material layer 2.

The liquid crystal layer 4 contains at least a liquid crystalline material 4b, a polymer material 4c, and an electrolyte supporting salt (not shown). The liquid crystalline material 4b is dispersed in forms of droplets in the matrix of the polymer material 4c, and liquid crystals (here, represented as sold bars) are randomly oriented in each of the droplets. The matrix of the polymer material 4 is impregnated with the electrolyte supporting salt in a state of being dissolved in a solvent or in a form of ionic liquid that is itself in a liquid state, and the electrolyte supporting salt can cause ionic conduction between the substrates 1A and 1B.

In a state with the voltage being OFF, the light modulating element 10 scatters light due to randomly oriented state of the liquid crystalline material 4b. When an alternating-current voltage is applied between the first substrate 1A and the second substrate 1B, the liquid crystalline material 4b is oriented by an electric field generated by the applied voltage, thereby improving the light transmittance of the light modulating element 10. When the application of the alternating-current voltage is stopped, the orientation of the liquid crystalline material 4b is returned to a random state, and the light modulating element 10 again becomes high in haze. On the other hand, since the liquid crystal layer 4 contains the electrolyte supporting salt, ion conduction is caused between the electrochromic material layer 2 and the ion storage layer 3 when a direct-current voltage is applied between the first substrate 1A and the second substrate 1B, and coloration and discoloration of the electrochromic material layer 2 can be controlled by oxidation and reduction of the electrochromic material.

In the light modulating element 10 according to the present invention, it is possible to realize various states of light modulation by switching light scattering/transmitting state of the liquid crystalline material 4b and coloring/discoloring state of the electrochromic material through, as described above, switching ON/OFF of the alternating-current voltage and ON/OFF of the direct-current voltage, and switching the application direction of the direct-current voltage. For example, the light modulating element 10 according to the present invention may function in four modes including: a first mode in which the electrochromic material layer 2 is decolored while the liquid crystal layer 4 is transparent; a second mode in which the electrochromic material layer 2 is decolored while the liquid crystal layer 4 scatters light; a third mode in which the electrochromic material layer 2 is colored while the liquid crystal layer 4 is transparent; and a fourth mode in which the electrochromic material layer 2 is colored while the liquid crystal layer 4 scatters light. While the four modes are employed herein, the colorability of the electrochromic material layer 2 can be continuously changed between a maximized colored state and a decolored state by controlling the applied voltage and/or the time of applying the voltage. Thus, for example, when the light modulating element 10 according to the present invention is used as a light modulating element for the roof glass of a vehicle or the window glass of a building, various states of light modulation can be selected depending on use environments.

### [Transparent Conductive Substrate]

While the substrate 1a constituting the transparent conductive substrate 1(1A, 1B) may be made of a hard transparent material such as inorganic glass, polycarbonate, or acrylic resin, a flexible transparent film made of a polyethylene terephthalate (PET), a polyethylene naphthalate (PEN), a polyimide (PI), a triacetyl cellulose (TAC), or the like may be employed as the substrate 1a.
The transparent conductive material layer 1b may be made of a conductive transparent oxide, and examples of the oxide include a tin-doped indium oxide (ITO), a zinc oxide, a gallium-doped zinc oxide (GZO), an aluminum-doped zinc oxide (AZO), a tin oxide, an antimony-doped tin oxide (ATO), a fluorine-doped tin oxide (FTO), and a niobium-doped titanium oxide (TNO) or the like. For example, these oxides may be formed on the substrate 1a by vapor deposition. Alternatively, the transparent conductive material layer 1b may be made of a transparent conductive organic material such as poly(3,4-ethylenedioxythiophene) (PEDOT) or the like. For example, an aqueous dispersion of a mixture of PEDOT and polystyrene sulfonic acid (PSS) (PEDOT : PSS) or a solution obtained by dissolving PEDOT in an organic solvent such as propylene carbonate or nitromethane may be applied onto the substrate 1a by a method such as spin coating and dried to form the transparent conductive material layer 1b.

The thickness of the transparent conductive substrate 1 is not particularly limited. For example, the conductive material layer 1b of 500 nm to 1 nm, preferably 300 nm to 50 nm in thickness may be laminated on the substrate 1a of 5 mm to 5 µm, preferably 500 to 50 µm in thickness.

### [Electrochromic Material Layer]

As the electrochromic material constituting the electrochromic material layer 2, it is possible to use known materials, for example, metal oxides such as a tungsten oxide, a molybdenum oxide, a vanadium oxide, a nickel oxide, or an iridium oxide or the like. For example, an ink-like dispersion obtained by dispersing a tungsten oxide (WO₃) powder together with a binder in an aqueous solvent may be applied by a known coating method, and then dried to form the electrochromic material layer 2. For the tungsten oxide powder, the average particle size of primary particles is preferably 1 to 100 nm, more preferably 5 to 50 nm.

After the coating, if necessary, heating may be performed at around a temperature higher than the room temperature and lower than 120°C at the time of the drying. The coating method is not particularly limited, and a roll coating method, a bar coating method, a dip coating method, a spin coating method, a casting method, a die coating method, a blade coating method, a gravure coating method, a curtain coating method, a spray coating method, a doctor coating method, and the like can be used. As a printing method, a letterpress (typographical) printing method, a stencil (screen) printing method, a planographic (offset) printing method, an intaglio (gravure) printing method, a spray printing method, an inkjet printing method, and the like can be used, and a roll coating method, a gravure printing method, and the like are suitable for applying a coating material to a large-area substrate on an industrial production scale. A layer thickness of the electrochromic material layer 2 after drying the ink is preferably about 0.3 to 5 µm, more preferably about 1 to 2 µm.

### [Ion Storage Layer]

The ion storage layer 3 is a layer containing an ion storage material that reversibly absorbs and releases ions (for example, potassium ions) released from the electrochromic material layer 2. Such an ion storage material may contain, for example, at least one selected from an iridium oxide, a nickel oxide, a manganese oxide, a vanadium oxide, titanium-vanadium oxide, titanium-cerium oxide, and niobium-vanadium oxide. The ion storage material itself may be an electrochromic material. In such a case, the ion storage material is preferably colored by oxidation if the material contained in the electrochromic material layer is colored by reduction, and the ion storage material is preferably colored by reduction if the material contained in the electrochromic material layer is colored by oxidation. For example, the ion storage material may contain an oxidative coloring-type electrochromic material such as a metal-cyanide complex (sometimes referred to as a Prussian blue-type complex).

Primary particles of the ion storage material preferably have an average particle size of 500 nm or less, more preferably 300 nm or less, particularly preferably 100 nm or less. The lower limit of the average particle size of the primary particles is not particularly limited, but may be 4 nm or more or 10 nm or more.

The ion storage layer 3 can be formed by dispersing particles of the ion storage material in water or an aqueous dispersion medium to prepare a slurry (coating material), and applying the slurry onto the substrate 1 and drying the applied slurry. As the coating method, the same method as the method used for the formation of the electrochromic material layer 2 described above can be used. A content of the aqueous solvent in the slurry is, depending on the coating method, preferably 50 to 95% by weight, more preferably 70 to 90% by weight. A layer thickness of the ion storage layer 3 after the drying is preferably about 0.5 to 3 µm, more preferably about 0.7 to 2 µm.

### [Liquid Crystal Layer]

As the liquid crystalline material 4b constituting the liquid crystal layer 4, materials that are typically used in polymer-dispersed liquid crystal elements may be used. Examples thereof include E8, E7, BL009, BL015, and BL035 manufactured by Merck KGaA, and PN001 to PN0 10 manufactured by RODIC. The polymer material may be, for example, a material obtained through polymerization of a photopolymerizable material (for example, NOA65 from Noland Products) as a raw material by ultraviolet irradiation or the like.

In the present invention, the liquid crystal layer 4 contains therein an electrolyte supporting salt, and may contain a solvent therefor, if necessary. For example, the liquid crystal layer may contain a (trifluoro-methanesulfonyl)imide salt and, for example, a propylene carbonate or a carbonate-based solvent such as an ethylene carbonate, a diethyl carbonate, or a dimethyl carbonate.

The liquid crystal layer 4 preferably contains an electrolyte supporting salt in the form of an ionic liquid.
As the ionic liquid, common ionic liquids may be used. For example, the ionic liquid may contain, as a cation, at least one selected from an imidazolium salt, a pyrrolidinium salt, a pyridinium salt, a piperidinium salt, an ammonium salt, a phosphonium salt, and a sulfonium salt, which may be a chloride, a bromide, or an iodide thereof. For example, 1-butyl-3-methylimidazolium iodide, 1-allyl-3-ethylimidazolium bromide, or the like may be used.

The quantitative ratios of the liquid crystalline material, polymer material (polymerizable compound as a raw material therefor), and electrolyte supporting salt (for example, ionic liquid) constituting the liquid crystal layer may be, in terms of % by weight, respectively liquid crystalline material: 90% to 20%, polymer: 80% to 10%, and electrolyte supporting salt: 1% to 20%, and are preferably liquid crystalline material: 80% to 60%, polymer: 40% to 20%, and electrolyte supporting salt: 3% to 8%.

### [Method for Manufacturing Light Modulating Element]

For example, the light modulating element 10 may be manufactured by the following process. An electrochromic material (or an ion storage material) may be applied onto one of the transparent conductive substrate 1 via a known coating method such as roll coating method. Then, an adhesive for sealing material 5 may be applied to the peripheral edge. Next, a mixture of the liquid crystalline material, the polymerizable material, and the electrolyte supporting salt can be applied to the layer surrounded by the frame formed by the adhesive. Then, the other transparent conductive substrate 1 with the ion storage material (or electrochromic material) applied thereto is placed on the flame. Then, the polymerizable material may be polymerized to form the liquid crystal layer 4, and the adhesive may be cured to form the sealing material 5 by irradiation of light (preferably ultraviolet rays).

In the case of using a transparent resin film such as a PET as the substrate 1a of the transparent conductive substrate 1, the thickness of the whole light modulating element 10 can be 50 to 600 µm, for example, about 100 to 400 µm.

The light modulating element 10 according to the present invention may have a configuration including a control system 8 (Fig. 1) connected to the conductive layers 1b of the first conductive substrate 1A and second conductive substrate 1B. The control system 8 is configured to be capable of applying an alternating-current voltage to the first conductive substrate 1A and the second conductive substrate 1B and capable of bidirectionally applying a direct-current voltage. For example, in the case of making the electrochromic material layer 2 from an electrochromic material that is colored by reduction, when a direct-current voltage is applied so that the second substrate 1B has a higher potential and the first substrate 1A has a lower potential, an ion current flows through the liquid crystal layer 4 to reduce and color the electrochromic material. When the application of the direct-current voltage is stopped, this colored state is maintained. In contrast, when a direct-current voltage is applied so that the first substrate 1A has a higher potential and the second substrate 1B has a lower potential, the colored electrochromic material is decolored by oxidation. When the application of the direct-current voltage is stopped, the decolored state is maintained. When an alternating-current voltage is applied between the first substrate 1A and the second substrate 1B, the liquid crystalline material is oriented, and the liquid crystal layer becomes transparent. At that time, because the applied voltage is an alternating-current voltage, the colored or decolored state is maintained with little or without any influence on the oxidation-reduction state of the electrochromic material.

The applied direct-current voltage may be -10 to +10 V, preferably -5 to +5 V. The effective value of the applied alternating-current voltage may be 200 to 10 V, preferably 150 to 30 V.

The colored/decolored state of the electrochromic material layer 2(and the ion storage layer 3 in some cases) constituting the light modulating element 10 and the light transmitting/scattering state achieved with the liquid crystal layer can be arbitrarily combined in the manner mentioned above. Thus, in a case where the light modulating element 10 is incorporated as, for example, an interlayer film for the roof glass of a vehicle, light modulation can be flexibly performed depending on sunlight or changes in weather. In addition, the use of the light modulating element for the window glass of a building allows the indoor privacy to be maintained by scattering light while blocking sunlight by coloring.

### [Laminate]

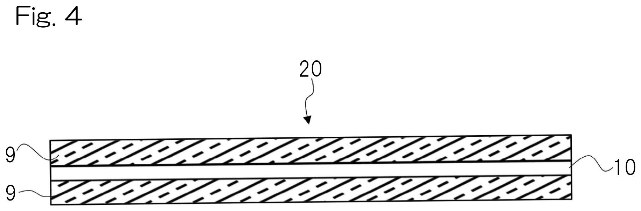

The light modulating element 10 configured as mentioned above may be further laminated with another member such as glass. As an example, as shown in Fig. 4, a laminated glass 20 that has a light modulating function with the light modulating element 10 sandwiched between two sheets of transparent glass 9 may be used as the window glass of a building or the window glass of a vehicle. Further, although not shown herein, the light modulating element 10 may be sandwiched in an interlayer film of a common laminated glass, which is made of, for example, a polyvinyl butyral or the like.

Note that the present invention is not limited to the embodiment mentioned above or any example, and various changes can be made. For example, while the laminate with the light modulating element 10 sandwiched between the two sheets of glass 9 has been described, the use of glass for the transparent substrate 1a allows the light modulating element 10 itself to serve as a light modulating glass. The control system that controls the applied voltage may be a control device that forms a part of the light modulating element 10, or may be incorporated in a control system for a vehicle or a building.

### EXAMPLE

A prototype of the light modulating element described above was made as an example.

Transparent conductive substrates 1A and 1B were prepared by vapor deposition of transparent conductive layers 1b (about 150 nm in thickness) each made of an ITO film on two transparent substrates 1a made of transparent films (PET substrates of 188 µm in thickness, and 5 cm in length × 5 cm in width). A coating material containing a tungsten oxide powder was applied onto the ITO film of the first substrate 1A by bar coating and was dried to form an electrochromic material layer 2 of 2.0 µm in thickness. A coating material containing a Prussian blue powder was applied onto the ITO film of the second substrate 1B by bar coating and was dried to form an ion storage layer 3 of 1 µm in thickness. Next, a photopolymerizable adhesive was applied to the outer edge of the ion storage layer 3. A mixture of E-7 as a liquid crystalline material, a photopolymerizable adhesive NOA65 manufactured by Norand Products as a photopolymerizable material, and an ionic liquid of 1-butyl-3-methylimidazolium iodide as an electrolyte supporting salt at weight ratios of about 75 : 20 : 5 was applied on the ion storage layer surrounded by the frame of the adhesive so as to have a thickness of 20 µm. Next, the first substrate 1A was placed so that the electrochromic material layer 2 thereon was brought into contact with the electrolyte. Then, ultraviolet rays was irradiate to the thus formed layered body from above the first substrate 1A so that the irradiance level was 1 J/cm². Electrodes were connected to the thus-formed light modulating element 10. When an alternating-current voltage with an effective value of 100 V and a direct-current voltage of 0 to 2 V were applied between the transparent conductive substrates 1A and 1B, states of light modulation in the first to fourth modes described above could be observed.

As described above, the preferred embodiment has been described with reference to the drawings. However, those skilled in the art will readily envision various changes and modifications within the scope of the present description. Accordingly, such changes and modifications are to be construed as being within the scope of this invention as defined by the claims.

### REFERENCE SIGNS LIST

- 1: Transparent conductive substrate
- 1A: First substrate
- 1B: Second substrate
- 1a: Transparent substrate
- 1b: Conductive layer
- 1c: Conductive surface
- 2: Electrochromic material layer
- 3: Ion storage layer
- 4: Liquid crystal layer
- 4a: Side surface
- 4b: Liquid crystalline material
- 4c: Polymer
- 5: Sealing material
- 6: Electrode
- 7: Wiring
- 8: Control system
- 9: Glass
- 10: Light modulating element
- 20: Laminate

## Claims

1. A light modulating element (10) comprising:
a first transparent conductive substrate (1A);
a second transparent conductive substrate (1B);
an electrochromic material layer (2) laminated on the first transparent conductive substrate (1A);
an ion storage layer (3) laminated on the second transparent conductive substrate (1B); and
a liquid crystal layer (4) with ion conductivity, sandwiched between the electrochromic material layer (2) and the ion storage layer (3),
wherein the liquid crystal layer (4) contains a liquid crystalline material (4b), a polymer material (4c), and an electrolyte supporting salt.

2. The light modulating element (10) according to claim 1, wherein
the light modulating element (10) is capable of functioning in four modes including:
a first mode in which the electrochromic material layer (2) is decolored while the liquid crystal layer (4) is transparent;
a second mode in which the electrochromic material layer (2) is decolored while the liquid crystal layer (4) scatters light;
a third mode in which the electrochromic material layer (2) is colored while the liquid crystal layer (4) is transparent; and
a fourth mode in which the electrochromic material layer (2) is colored while the liquid crystal layer (4) scatters light.

3. The light modulating element (10) according to claim 2, wherein
the light modulating element (10) is configured to be capable of applying a direct-current voltage and an alternating-current voltage between the first transparent conductive substrate (1A) and the second transparent conductive substrate (1B) , and
the four modes are switched by ON/OFF of the direct-current voltage, reversing a direction of applying the direct-current voltage, and ON/OFF of the alternating-current voltage.

4. The light modulating element (10) according to any one of claim 1 to 3, wherein the electrolyte solution contains an ionic liquid.

5. The light modulating element (10) according to any one of claims 1 to 3, wherein
the ion storage layer (3) further shows colorability depending on oxidation or reduction, and
the ion storage layer (3) is colored by reduction when the electrochromic material layer (2) is colored by oxidation, and
the ion storage layer (3) is colored by oxidation when the electrochromic material layer (2) is colored by reduction.

6. A laminate (20) comprising:
an outer glass (9);
an inner glass (9); and
the light modulating element (10) according to any one of claims 1 to 3 disposed between the outer glass (9) and the inner glass (9).
